# EUROPEAN PATENT APPLICATION

(11) **EP 4 462 512 A1**
(43) Date of publication of application: **13.11.2024**
(21) Application number: 23210007.3
(22) Date of filing: 15.11.2023
(51) Int. Cl.: H01M 4/525, C01G 53/00, H01M 4/02

(54) **POSITIVE ELECTRODE MATERIAL AND PREPARATION METHOD THEREOF, AND ELECTROCHEMICAL DEVICE**

(30) Priority: 11.05.2023 CN 202310531853
(71) Applicant: AESC Dynamics Technology (Jiangsu) Ltd., 214443 Wuxi City, Jiangsu Province (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN); AESC Intelligent Innovation Dynamics Technology (Shanghai) Ltd., Shanghai 201315 (CN)
(72) Inventor: ZHU, Jianping, Pudong New Area Shanghai, 201315 (CN); WANG, Wenjing, Pudong New Area Shanghai, 201315 (CN); SUN, Shuxian, Pudong New Area Shanghai, 201315 (CN); YANG, Wenlong, Pudong New Area Shanghai, 201315 (CN); SUN, Huayu, Pudong New Area Shanghai, 201315 (CN)
(74) Representative: Becker, Eberhard

(57) **Abstract**

The invention provides a positive electrode material, a preparation method thereof, and an electrochemical device. The positive electrode material is a secondary particle (1) formed by the aggregation of primary particles. The secondary particle contains a cavity structure (2) inside. Based on the positive correlation characteristics between the content of an A element in the positive electrode material particles and the cavity ratio, by introducing an appropriate proportion of the A element when the positive electrode material precursor is formed, the accompanying cavity structure formed inside the precursor is at an appropriate cavity ratio, in order to ensure that the positive electrode material may buffer the volume strain during the charge and discharge process through the internal appropriate proportion of the cavity structure, and alleviate the rupture phenomenon of the secondary particle during the cycle, thereby improving the cycle life and volume energy density of the positive battery.

## Description

### BACKGROUND OF THE INVENTION

### Field of the Invention

The invention relates to the technical field of lithium ion batteries, in particular to a positive electrode material and a preparation method thereof, and an electrochemical device.

### Description of Related Art

A high-nickel ternary positive electrode material (LiNiₓCo_{y}Mn_{1-x-y}O₂, wherein 0<x< 1, 0<y< 1), due to the higher theoretical specific capacity (about 276 mAh/g), higher voltage platform (about 3.6 V), and higher tap density thereof, is widegfly used in high specific energy lithium-ion battery systems. In particular, the high-nickel ternary positive electrode material may further obtain a ternary material with high specific energy and low cost by increasing the nickel content and reducing the cobalt content in the material. However, considering that the ternary positive electrode material is a secondary particle formed by the accumulation of primary particles, the high-nickel ternary positive electrode material LiNiₓCo_{y}Mn_{1-x-y}O₂ (1>x≥0.8, 0<y≤0.1) produces a larger microscopic stress between the primary particles during the charge and discharge process. This microscopic stress is gradually accumulated with the cycle, eventually leading to the rupture of the secondary particle, and the deterioration of the cycle and gas production performance of the battery.

Currently, in the prior art, the main method for modifying ternary positive electrode materials is still element doping and coating optimization. Although the above method may improve the cycle performance of the ternary material to a certain extent, the method makes the preparation process of the ternary material more complicated and cumbersome, and may not meet the market demand.

Therefore, it is necessary to design a positive electrode material and a preparation method thereof, a positive electrode sheet, and an electrochemical device, so as to solve the above issues.

### SUMMARY OF THE INVENTION

In view of the above shortcomings of the prior art, the invention provides a positive electrode material and a preparation method thereof, a positive electrode sheet, and an electrochemical device, to solve the technical issue that the positive electrode material in the prior art is readily ruptured due to microscopic stress during the charge and discharge process, causing the cycle and gas production performance of the battery to deteriorate.

To achieve the above object and other related objects, the invention provides a positive electrode material. The positive electrode material is a secondary particle formed by an aggregation of primary particles, and the secondary particle contains a cavity structure inside.

In an example of the invention, a chemical formula of the positive electrode material is Li₁₊ₐ[NiₓCo_{y}M_{z}]O_{2-b}A_{b}, 0.7 ≤ x < 1, 0 ≤ y < 0.3, 0 ≤ z < 0.3, -0.2 < a < 0.2, 0 ≤ b < 0.2, x + y + z = 1; wherein the M element includes one or a plurality of Mn, Al, Ti, Zr, Mg, Sr, W, Mo, B, V, Se, Nb, Ru, Rh, Pd, Sb, Te, Ce, Ca, Zn, Y and W, the A element includes one or a plurality of F, N, Cl, S, and P.

In an example of the invention, at least one element of the A element is attached to an inner layer of the cavity structure.

In an example of the invention, the element attached to the inner layer of the cavity structure includes a sulfur element, and a cavity ratio of the positive electrode material is positively correlated with a content of the sulfur element in the positive electrode material.

In an example of the invention, when a sulfur element content in the secondary particle is 0.01 wt% to 0.35 wt%, the positive electrode material has a cavity ratio of 0.5% to 10%, and a particle tap density of the positive electrode material is 2.38 g/cm³ to 2.81 g/cm³.

In an example of the invention, a valence state of the sulfur element in the positive electrode material is at least one of -2 valence, +4 valence, and +6 valence; wherein the sulfur element remains in the cavity structure in a form of at least one of sulfide ions, thiosulfate ions, sulfate ions, and sulfite ions.

In an example of the invention, when the sulfur element content in the secondary particle is 0.01 wt% to 0.1 wt%, an XPS photoelectron peak binding energy range of the sulfur element in the positive electrode material is 168±2eV; when the sulfur element content in the secondary particle is 0.01 wt% to 0.05 wt%, the XPS photoelectron peak binding energy range of the sulfur element in the positive electrode material is 168.5±1eV.

In an example of the invention, an inner diameter of the cavity structure is 10 nm to 1 *µ*m.

The invention also provides a preparation method of a positive electrode material, the preparation method including: mixing a nickel source, a cobalt source, an M element carrier source, a precipitant, and a complexing agent for a co-precipitation reaction to obtain a nickel-cobalt precursor material; mixing the nickel-cobalt precursor material and a lithium source and then sintering to obtain a positive electrode material; wherein the M element includes one or a plurality of Mn, Al, Ti, Zr, Mg, Sr, W, Mo, B, V, Se, Nb, Ru, Rh, Pd, Sb, Te, Ce, Ca, Zn, Y and W, at least one element carrier source in the nickel source, the cobalt source, and the M source is sulfate; during a co-precipitation reaction synthesis process, the nickel-cobalt precursor forms a cavity structure inside the secondary particle.

In an example of the invention, the nickel source, the cobalt source, and the M element carrier source include an A element, and the A element includes one or a plurality of F, N, Cl, S, and P, wherein during the co-precipitation reaction synthesis process of the nickel-cobalt precursor, the A element is attached inside the cavity structure.

In an example of the invention, the sulfur element in the element A is attached inside the cavity structure, and a cavity ratio of the positive electrode material is 0.5% to 10%.

The invention also provides a positive electrode sheet. The positive electrode sheet includes a positive electrode current collector and a positive electrode active material layer, and the positive electrode active material layer adopts the positive electrode material of any one of the above examples.

The invention also provides an electrochemical device. The electrochemical device includes a positive electrode sheet, a negative electrode sheet, a separator, and an electrolyte solution, and the positive electrode sheet includes the positive electrode material of any of the above examples, or the positive electrode material prepared by the preparation method of any of the above examples.

In the positive electrode material and the preparation method thereof, the positive electrode sheet, and the electrochemical device of the invention, based on the positive correlation characteristics between the content of the A element in the positive electrode material particles and the cavity ratio, by introducing an appropriate proportion of the A element when the positive electrode material precursor is formed, the accompanying cavity structure formed inside the precursor is at an appropriate cavity ratio, in order to ensure that the positive electrode material may buffer the volume strain during the charge and discharge process through the internal appropriate proportion of the cavity structure, and alleviate the rupture phenomenon of the secondary particle during the cycle, thereby improving the cycle life and volume energy density of the positive battery. Therefore, the invention effectively overcomes some practical issues in the prior art and thus has high utilization value and use significance.

### BRIEF DESCRIPTION OF THE DRAWINGS

In order to more clearly explain the technical solutions in the examples of the invention or prior art, the following briefly introduces the figures required in the description of the examples or prior art. Obviously, the figures in the following description are only some examples of the invention. For those of ordinary skill in the art, without inventive-step effort, other figures may be obtained based on these figures.
FIG. 1 is a scanning electron microscope test diagram of a positive electrode material in the invention.
FIG. 2 is a schematic flowchart of a preparation method of a positive electrode material in the invention.

### REFERENCE SIGNS LIST

1: secondary particle
2: cavity structure

### DESCRIPTION OF THE EMBODIMENTS

Embodiments of the invention are described below through specific examples, and those skilled in the art may easily understand other advantages and effects of the invention from the content disclosed in this specification. The invention may also be implemented or applied through other different specific implementation modes, and various modifications or changes may be made to the details in this specification based on different viewpoints and applications without departing from the spirit of the invention. It should be noted that, in the case of no conflict, the following embodiments and features in the embodiments may be combined with each other. It should also be understood that the terminology used in the embodiments of the invention is for describing specific implementations, not for limiting the scope of the invention. The test methods for which specific conditions are not indicated in the following embodiments are usually in accordance with conventional conditions, or in accordance with the conditions suggested by each manufacturer.

It should be noted that terms such as "upper", "lower", "left", "right", "middle", and "one" quoted in this specification are only for the convenience of description and are not used to limit the scope to which the invention may be practiced, and the change or adjustment of the relative relationship thereof shall also be regarded as the implementable scope of the invention without substantive change of the technical content.

The invention discloses a positive electrode material and a preparation method thereof, a positive electrode sheet, and an electrochemical device. By introducing an appropriate proportion of an A element when the positive electrode material precursor is formed, the proportion of the accompanying cavity structure formed inside the precursor is at an appropriate cavity ratio, in order to ensure that the positive electrode material may buffer the volume strain during the charge and discharge process through the internal cavity structure with an appropriate proportion, and alleviate the rupture phenomenon of the secondary particle during the cycle, so that the technical issue that the positive electrode material in the prior art is readily ruptured due to microscopic stress during charge and discharge and causing the cycle and gas production performance of the battery to deteriorate is solved.

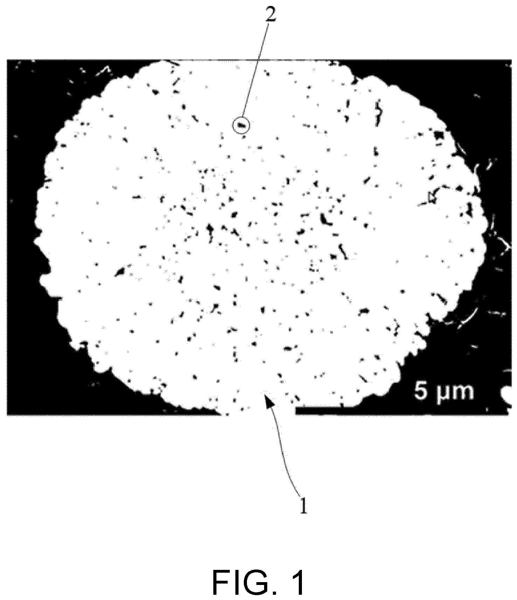

Please refer to FIG. 1, the positive electrode material of the invention is a high-nickel ternary positive electrode material, the positive electrode material is a spherical secondary particle 1 formed by the aggregation of primary particles, and the spherical secondary particle 1 contains a discrete cavity structure 2 inside. The cavity structure 2 existing in the secondary particle 1 has a rich morphology, and these cavity structures 2 facilitate the release of microscopic stress generated in the positive electrode material during the charge and discharge process, and alleviate rupture of the secondary particle 1 caused by the accumulation of stress among the primary particles, thereby improving the cycle life of the positive electrode material. It should be noted that the cavity structure is a hollow cavity structure formed inside the secondary particle of the positive electrode material due to the volatilization and gas production of internal elements when the positive electrode material is sintered and molded. In particular, during the forming of the cavity structure of the positive electrode material, the A element introduced into the positive electrode material is adhered to the inner wall of the cavity structure, thereby expanding the volume of the cavity structure.

In particular, the primary particles of the positive electrode material are a high-nickel ternary material, and the chemical formula of the high-nickel ternary material is Li₁₊ₐ[NiₓCo_{y}M_{z}]O_{2-b}A_{b}; wherein 0.7 ≤ x < 1, 0 ≤ y < 0.3, 0 ≤ z < 0.3, -0.2 < a < 0.2, 0 ≤ b < 0.2, x + y + z = 1. In an optional embodiment, the high-nickel ternary material is preferably Li₁₊ₐ[NiₓCo_{y}M_{z}]O_{2-b}A_{b}; wherein 0.8 ≤ x < 1, 0 ≤ y < 0.1, 0 ≤ z < 0.2, -0.2 < a < 0.2, 0 ≤ b < 0.2, x + y + z = 1.

In some embodiments, the M element in the high-nickel ternary material is selected from any one or a plurality of Mn, Al, Ti, Zr, Mg, Sr, W, Mo, B, V, Se, Nb, Ru, Rh, Pd, Sb, Te, Ce, Ca, Zn, Y, and W. That is, the M element may be any one of the element types listed above, such as Mn, Al, Ti, Zr, Mg, Sr, W, Mo, or B, etc.; the M element may be a combination of any two or a plurality of the elements listed above. For example, the M element is a combination of Mn and Zr, or a combination of Al and Ti, or a combination of Al and Ce, a combination of or Mn, Al, and W, or a combination of Mn, Al, Nb, and Ru, etc., which are not listed here.

The element A in the high-nickel ternary material is selected from any one or a plurality of F, N, Cl, S, and P. That is, the A element may be any one of the element types listed above, such as F, N, Cl, S or P, etc.; the A element may be a combination of any two or a plurality of the element types listed above. For example, the A element is a combination of S and Cl, or a combination of F and S, or a combination of N and Cl, or a combination of S, P, and Cl, or a combination of S, N, F, and Cl, etc., which are not listed here.

In addition, when the A element and the M element are a combination of two or a plurality, there is no limit to the ratio of each element in the combination, and they may be mixed in any ratio, and so on. In other embodiments, the A element and the M element may also be element types not listed above.

In particular, the A element contained in the positive electrode material is retained in the secondary particle when the nickel source, the cobalt source, and the M element carrier source are co-precipitated to synthesize the nickel-cobalt precursor. In an embodiment of the invention, in the positive electrode material, at least one element of the A element is attached to the cavity structure in the secondary particle, and the A element remaining in the cavity has a positive correlation with the cavity ratio in the secondary particle. Therefore, for the positive electrode material, the microstructure inside the secondary particle of the positive electrode material may be determined by the cross-sectional cavity ratio of the positive electrode particle and the A element content index. It should be noted that the "cavity ratio" of the positive electrode material herein refers to the area ratio of the cavity structure in the cross-section of the secondary particle and the cavity ratio may be measured as follows: the secondary particle of the positive electrode material is cut by using a focused ion beam, followed by taking a cross-sectional photograph using a scanning electron microscope, and then calculating the ratio of the total area of the cavity structure to the cross-sectional area of the secondary particle using the cross-sectional photograph. The content of the A element in the positive electrode material may be obtained by EDS energy spectrum analysis of a transmission electron microscope test.

In the positive electrode material, at least one element contained in the A element is attached to the inner wall of the cavity structure in the secondary particle, and when the cavity ratio of the secondary particle cross-section and the content of the A element are in an appropriate range, for example, when the cavity ratio is 0.5% to 10%, the cavity structure and morphology inside the positive electrode material are rich. These cavity structures facilitate the release of the microscopic stress generated by the positive electrode material during the charge and discharge process, and alleviate the secondary particle rupture caused by the stress accumulation between the primary particles, thereby improving the cycle life of the high-nickel positive electrode material.

When the cavity ratio and A element content in the positive electrode material are too low (that is, when the cavity ratio of the positive electrode material is less than 0.5%), the secondary particle of the positive electrode material is denser and has a higher tap density. The stress generated by the volume phase transition of the material during the charge and discharge process has no place to release, and readily causes the secondary particle to rupture during the stress accumulation process, making it difficult to improve the cycle life of the positive electrode material; and when the cavity ratio and A element content in the positive electrode material are too high (that is, when the cavity ratio of the positive electrode material is greater than or equal to 15%), the tap density of the positive electrode material particles is lower, the volumetric energy density of the battery cell is lower, and the contact area with the electrolyte solution is increased during the charge and discharge process, which intensifies the side reaction with the electrolyte solution and deteriorates the cycle of the positive electrode material.

It should be mentioned that, tap density (TD) refers to putting a certain amount of powder into a container, vibrating regularly under certain conditions, compressing the gaps between the particles as much as possible, and lastly reaching the point where the gaps between the particles may not be reduced, reading the volume of the powder at this time, and then dividing the weight of the powder by this volume to obtain the tap density. The tap density of the positive electrode material in the invention is obtained by testing according to the national standard GB/T5162-2006.

In some embodiments, the element attached to the inner layer of the cavity structure includes a sulfur element. In particular, when the sulfur element content in the positive electrode material is 0.01 wt% to 0.35 wt%, the cross-section of the secondary particle of the positive electrode material has a cavity ratio of 0.5% to 10%. At this time, the particle tap density of the positive electrode material is 2.38 g/cm³ to 2.81 g/cm³, and the positive electrode material may maintain a cycle capacity retention rate of 80% or more at 800 cycles, with a lower increase in gas production and a longer cycle life.

Preferably, when the sulfur element content in the positive electrode material is 0.01 wt% to 0.05 wt%, the secondary particle cross-section of the positive electrode material has a cavity ratio of 0.5% to 5%, and the particle tap density of the positive electrode material is 2.49 g/cm³ to 2.81 g/cm³. At this time, the positive electrode material may maintain a cycle capacity retention rate of 80% or more at 800 cycles, the gas production growth rate is lower under different cavity ratios within the range, and the gas production growth rate of the positive electrode material after 56 days of operation is always 4% or less.

In some embodiments, the valence state of the sulfur element in the positive electrode material is at least one of -2 valence, +4 valence, and +6 valence, and in the positive electrode material, the sulfur element is stored in the cavity structure in the form of at least one of sulfide ions, thiosulfate ions, sulfate ions, and sulfite ions.

In particular, the content of the sulfur element in the secondary particle affects the valence state of the sulfur element in the positive electrode material. For example, when the content of the sulfur element in the secondary particle of the positive electrode material is 0.01 wt% to 0.1 wt%, the XPS photoelectron peak binding energy range of the sulfur element in the positive electrode material is 168±2eV, the valence state of the sulfur element in the positive electrode material is -2 valence, +4 valence, and +6 valence, and the sulfur element is stored in the cavity structure in the form of sulfur ions, thiosulfate ions, sulfate ions, and sulfite ions; when the sulfur element content in the secondary particle of the positive electrode material is 0.01 wt% to 0.05 wt%, the XPS photoelectron peak binding energy range of the sulfur element in the positive electrode material is 168.5±1eV, the valence state of the sulfur element in the positive electrode material is +4 valence and +6 valence, and the sulfur element remains in the cavity structure in the form of sulfate ions and sulfite ions.

As shown in FIG. 1, in some embodiments, the inner diameter of the cavity structure in the secondary particle of the positive electrode material is 10 nm to 1 *µ*m.

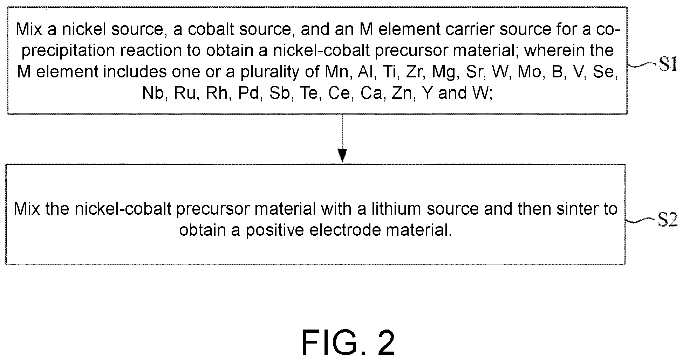

Please refer to FIG. 2, the invention provides a preparation method of a positive electrode material, including the following steps:

S 1. A nickel source, a cobalt source, and an M element carrier source are mixed with a precipitant and a complexing agent for a co-precipitation reaction. After the co-precipitation reaction is completed, the product is rinsed and dried to obtain a nickel-cobalt precursor material; wherein the nickel-cobalt precursor is NiₓCo_{y}M_{z}(OH)_{2-b}A_{b};

S2. The nickel-cobalt precursor material is mixed with a lithium source and then sintered, and the sintered product is crushed and classified to obtain a finished positive electrode material.

Step S1 specifically includes pumping the nickel source, the cobalt source, and the M element carrier source according to the molar ratio (70 to 100):(0 to 30):(0 to 30) of the nickel element, the cobalt element, and the M element into a continuous stirring reactor to obtain a mixed solution, then the mixed solution is mixed with a precipitating agent aqueous solution and a complexing agent aqueous solution for a co-precipitation reaction and aging to obtain a solid-liquid mixture; the solid-liquid mixture is press-filtered to obtain a filter cake, the filter cake is rinsed and dried to obtain the nickel-cobalt precursor NiₓCo_{y}M_{z}(OH)_{2-b}A_{b}, wherein 0.7 ≤ x < 1, 0 ≤ y < 0.3, 0 ≤z < 0.3, 0 ≤ b < 0.2, x + y + z = 1, and the molar ratio between each element may be selected within the above range according to specific requirements.

In step S1, the nickel source, the cobalt source, and the M element carrier source are respectively soluble salts loaded with a nickel element, a cobalt element, and an M element. As an example, the nickel source, the cobalt source, and the M element carrier source may be one or a plurality of soluble sulfates, oxalates, acetates, chlorides, nitrates, or carbonates. In particular, the nickel source, the cobalt source, and the M element carrier source include an A element, the A element is selected from any one or a plurality of F, N, Cl, S, and P, and the M element is selected from any one or a plurality of Mn, Al, Ti, Zr, Mg, Sr, W, Mo, B, V, Se, Nb, Ru, Rh, Pd, Sb, Te, Ce, Ca, Zn, Y, and W.

Preferably, in some embodiments, at least one element carrier source among the nickel source, the cobalt source, and the M element carrier source used in step S1 is sulfate.

There is no particular limitation on the above solvent, as long as the nickel source, the cobalt source, and the M element carrier source may be dissolved. As an example, the solvent may be selected from one or a plurality of deionized water, methanol, ethanol, acetone, isopropanol, and n-hexanol.

The precipitating agent is selected from one or a plurality of NaOH, KOH, and LiOH; the complexing agent is selected from one or a plurality of ammonia water, ammonium bicarbonate, ammonium carbonate, citric acid, and ethylenediaminetetraacetic acid.

In particular, during the synthesis process of the co-precipitation reaction, the nickel-cobalt precursor forms a cavity structure inside the secondary particle aggregated by the primary particles. The A element contained in the nickel source, the cobalt source, and the M element carrier source remains and is adhered inside the cavity structure with the forming of the cavity structure. The A element remaining in the cavity may effectively adjust the cavity structure formed in the secondary particle to enrich the morphology of the cavity structure in the positive electrode material. Moreover, there is a positive correlation between the A element remaining in the cavity and the cavity ratio in the secondary particle.

In some embodiments, the element A attached inside the cavity structure includes at least a sulfur element, and the content of the sulfur element in the positive electrode material is directly proportional to the cavity ratio of the particle cross-section. In step S1, the cavity ratio in the nickel-cobalt precursor is modulated by adjusting the sulfur element content of the nickel source, the cobalt source, and the M element carrier source in the co-precipitation reaction, so that the cavity ratio and the sulfur content of the secondary particle cross-section of the resulting positive electrode material are in an appropriate range. In this way, the cavity structure morphology inside the positive electrode material is enriched, and the cycle life performance of the positive electrode material is improved at the same time. For example, in an example, when the content of the sulfur element in the positive electrode material is 0.01 wt% to 0.35 wt%, the positive electrode material has a cavity ratio of 0.5% to 10%.

In some embodiments, the lithium source in step S2 may be selected from one or a plurality of lithium carbonate, lithium phosphate, lithium dihydrogen phosphate, lithium acetate, lithium hydroxide, lithium oxide, and lithium nitrate. Further, the lithium source may be selected from one or a plurality of lithium carbonate, lithium hydroxide, and lithium nitrate. Furthermore, the lithium source is lithium carbonate.

There is no particular limitation on the crushing method in step S2, and any crushing and grading method in the prior art may be used, for example, a jet mill is used. The specific parameters for crushing the sintered product may be selected according to actual needs.

The invention also provides a positive electrode sheet. The positive electrode sheet includes a positive electrode current collector and a positive electrode active material layer disposed on the current collector, wherein the positive electrode active material layer includes the positive electrode material of the invention.

The preparation process of the positive electrode sheet is as follows: the positive electrode material prepared above, a conductive agent, and a binder are mixed according to the mass ratio (90 to 99): 1.5:1.5 with a preferred mass ratio of 97:1.5:1.5, and the mixture is added to the solvent N-methylpyrrolidone (NMP) to fully stir and mix to obtain a positive electrode slurry; the positive electrode slurry is coated on the aluminum foil of a positive electrode current collector, and the positive electrode sheet is prepared through processes such as drying, cold pressing, and slitting. In particular, the conductive agent may be selected from: at least one of conductive materials such as Super P (carbon black), acetylene black, carbon nanotube (CNT), graphene, carbon nanofiber (VGCF). For example, the conductive agent is SP and CNT, the mass ratio of SP and CNT is 1:0.5; the binder may be selected from at least one of PVDF, PTFE, and the like.

The invention provides an electrochemical device. The electrochemical device includes the positive electrode material or the positive electrode sheet of the invention. The electrochemical device is, for example, a lithium-ion battery. Specifically, the lithium-ion battery includes a positive electrode sheet, a negative electrode sheet, a separator disposed between the positive electrode sheet and the negative electrode sheet, and an electrolyte solution.

In particular, the positive electrode sheet is prepared by the preparation method described above in the invention;

Negative electrode sheet preparation: after negative electrode materials such as graphite, conductive agent acetylene black, thickener CMC (sodium carboxymethylcellulose), and binder SBR (styrene-butadiene rubber) are mixed at a mass ratio of 96.4:1:1.2:1.4, deionized water is added to fully stir and mix to obtain a negative electrode slurry; the negative electrode slurry is evenly coated on a negative electrode current collector copper foil, and the negative electrode sheet is prepared through processes such as drying, cold pressing, and slitting;

Separator: materials PE and PP porous membranes are used as the separator, preferably PP/PE/PP porous membrane, with a thickness of 9 µm to 18 µm, such as 9 µm, 12 µm, 16 µm, or 18 *µ*m; the air permeability is 180 s/100mL to 380 s/100mL, such as 180 s/100mL, 280 s/100mL, or 380 s/100mL; the porosity is 30% to 50%, e.g., 30%, 40%, or 50%.

Electrolyte solution preparation: EC (ethylene carbonate), DMC (dimethyl carbonate), and EMC (ethyl methyl carbonate) are mixed in a mass ratio of 1:1:1 to obtain an organic solvent, and then fully dried lithium salt LiPF₆ is dissolved in the mixed organic solvent to prepare an electrolyte solution with a concentration of 1 mol/L.

Battery assembly: the resulting positive electrode sheet, separator, and negative electrode sheet are laminated in sequence, so that the separator is in the middle of the positive and negative electrode sheets to function as isolation. Then the above is covered with an aluminum-plastic film, and after drying, is injected with the electrolyte solution prepared above. After processes such as packaging, leaving to stand, and chemical forming, a soft-pack battery with a capacity of 1 Ah is lastly prepared (that is, a lithium-ion battery).

The technical solution of the invention is described in detail below through several specific examples and comparative examples. Unless otherwise specified, the raw materials and reagents used in the following examples are all commercially available, or may be prepared by conventional methods in the art.

### Example 1

Step 1. a solution of nickel sulfate, cobalt sulfate, and manganese sulfate was mixed according to Ni:Co:Mn molar ratio 90:5:5, and in above mixed salt solution, ammonia water and sodium hydroxide solution were added for a co-precipitation reaction, and after the co-precipitation reaction was finished, the product was rinsed and dried, wherein the sulfur content of the resulting nickel-cobalt precursor was detected to be 523 ppm after rinsing and drying;

Step 2. the nickel-cobalt precursor and lithium hydroxide were mixed with ZrO₂ with a content ratio of 0.2 wt%, and the mixture was calcined in an oxygen atmosphere at a temperature of 760 °C for 12 hours to obtain a polycrystalline positive electrode material substrate;

Step 3. the above polycrystalline positive electrode material substrate was mixed with Al₂O₃ with a content ratio of 0.1 wt%, and then sintered in an oxygen atmosphere at a temperature of 400 °C for 8 hours, and a finished positive electrode material was obtained after crushing and grading.

### Example 2

The difference between this example and Example 1 is that in step 1, the sulfur element concentration in the reactor during the co-precipitation reaction was adjusted so that the sulfur element content of the nickel-cobalt precursor prepared in step 1 was 1345 ppm.

### Example 3

The difference between this example and Example 1 is that in step 1, the sulfur element concentration in the reactor during the co-precipitation reaction was adjusted so that the sulfur element content of the nickel-cobalt precursor prepared in step 1 was 2732 ppm.

### Example 4

The difference between this example and Example 1 is that in step 1, the sulfur element concentration in the reactor during the co-precipitation reaction was adjusted so that the sulfur element content of the nickel-cobalt precursor prepared in step 1 was 3209 ppm.

### Example 5

The difference between this example and Example 1 is that in step 1, the sulfur element concentration in the reactor during the co-precipitation reaction was adjusted so that the sulfur element content of the nickel-cobalt precursor prepared in step 1 was 5378 ppm.

### Example 6

The difference between this example and Example 1 is that in step 1, the sulfur element concentration in the reactor during the co-precipitation reaction was adjusted so that the sulfur element content of the nickel-cobalt precursor prepared in step 1 was 8427 ppm.

### Example 7

The difference between this example and Example 1 is that in step 1, the sulfur element concentration in the reactor during the co-precipitation reaction was adjusted so that the sulfur element content of the nickel-cobalt precursor prepared in step 1 was 2937 ppm.

### Example 8

The difference between the present embodiment and Example 1 is: in step 1, the sulfur element concentration in the reactor during the co-precipitation reaction was adjusted, so that the sulfur element content of the nickel-cobalt precursor prepared in step 1 was 2863 ppm; in step 2, the nickel-cobalt precursor was mixed with lithium hydroxide, ZrO₂ with a content ratio of 0.2 wt%, and Al₂O₃ with a content ratio of 0.2 wt%, and the mixture was calcined in an oxygen atmosphere at a temperature of 760 °C for 12 hours; step 3: the polycrystalline positive electrode material substrate obtained in step 2 was mixed with Al₂O₃ with a content ratio of 0.1 wt% and TiO₂ with a content ratio of 0.1 wt%, and then the mixture was sintered in an oxygen atmosphere at a temperature of 350 °C for 8 hours, and the finished positive electrode material was obtained after crushing and grading.

### Example 9

The difference between the present embodiment and Example 1 is: in step 1, the sulfur element concentration in the reactor during the co-precipitation reaction was adjusted, so that the sulfur element content of the nickel-cobalt precursor prepared in step 1 is 2749 ppm; in step 2, the nickel-cobalt precursor was mixed with lithium hydroxide, ZrO₂ with a content ratio of 0.2 wt%, Al₂O₃ with a content ratio of 0.2 wt%, and MgO with a content ratio of 0.1 wt%, and the mixture was calcined in an oxygen atmosphere at a temperature of 760 °C for 12 hours; step 3: the polycrystalline positive electrode material substrate obtained in step 2 was mixed with Al₂O₃ with a content ratio of 0.1 wt% and B₂O₃ with a content ratio of 0.1 wt%, and then the mixture was sintered in an oxygen atmosphere at a temperature of 350 °C for 8 hours, and the finished positive electrode material was obtained after crushing and grading.

### Example 10

The difference between this example and Example 5 is that in step 1, the nickel sulfate, cobalt sulfate, and manganese sulfate solutions participating in the co-precipitation reaction were mixed according to the Ni:Co:Mn molar ratio of 70:15:15.

### Example 11

The difference between this example and Example 5 is that in step 1, the nickel sulfate, cobalt sulfate, and manganese sulfate solutions participating in the co-precipitation reaction were mixed according to the Ni:Co:Mn molar ratio of 80:10:10.

### Comparative example 1

The difference between this example and Example 8 is that in step 1, the sulfur element concentration in the reactor during the co-precipitation reaction was adjusted so that the sulfur element content of the nickel-cobalt precursor prepared in step 1 was 230 ppm.

### Comparative example 2

The difference between this example and Example 9 is that in step 1, the sulfur element concentration in the reactor during the co-precipitation reaction was adjusted so that the sulfur element content of the nickel-cobalt precursor prepared in step 1 was 12027 ppm.

The nickel-cobalt precursors prepared in step S1 in Examples 1 to 11 and Comparative examples 1 to 2 were tested for sulfur element content, and the sulfur content test method of the precursors included: the nickel-cobalt precursor sample obtained in step S1 was dissolved in hydrochloric acid, diluted with water to a certain volume, and the sulfur element content was tested on an inductively-coupled plasma mass spectrometer (ICP-MS).

The positive electrode sheets prepared in Examples 1 to 11 and Comparative examples 1 to 2 were tested for the sulfur content of the cross-section of the electrode particles and the cavity ratio of the cross-section of the electrode particles.

In particular, the sulfur content test of the cross-section of the electrode particles included: cutting an electrode sheet using an ion beam to obtain a cross-sectional sample of the electrode material, and using a high-resolution EDS test in a transmission electron microscope (TEM) to obtain the sulfur content of the cross-sectional sample.

The cavity ratio test of the cross-section of the electrode particles included: the SEM of the cross-section of the positive electrode may be obtained by capturing the SEM after cutting the positive electrode sheet with an ion beam. On the SEM image, the cavity usually showed a different contrast from other physical areas. We may identify the cross-sectional area of the cavity area using graphics software and calculate the cavity ratio. This patent provides an example of calculating the cavity ratio of the particle cross-section using the open source graphics software Image J:

Step a. first, the cross-section of the positive electrode sheet was obtained by means of ion beam cutting, etc., the particle cross-section cut from the center of the secondary particle was selected, and a high-resolution SEM was captured. The captured SEM needed to meet the uniform contrast of the cavity area, and the uniform contrast distribution of other physical areas;

Step b. the picture was opened using Image J, and the RGB channels were split using the "split channels" function to obtain a single-channel photo;

Step c. the measurement scale was set according to the scale of the electron microscope; a circular (or elliptical or irregular figure) selection area was defined, the entire cross-section of the secondary particle was selected, and the total area S1 of the selected area was measured;

Step d. the threshold of the picture was adjusted until all the cavity areas of the particle cross-section in the defined area were marked, and the total area S2 of the marked cavity area was obtained using the "analyze particle" function;

Step e. the cavity ratio was calculated as H=S2/S 1.

The positive electrode materials prepared in Examples 1 to 11 and the positive electrode materials prepared in Comparative examples 1 to 2 were assembled into a soft pack battery according to the assembly method of the invention for battery performance testing. The battery performance test included a cycle capacity retention test and a gas production performance test.

In particular, the battery cycle capacity retention test included: under the condition of 25 °C, cycling with 0.21 A/g (calculated by the mass of positive electrode material) using 2.8 V to 4.25 V charge and discharge system. After 800 cycles, the discharge capacity of the battery at this time was divided by the discharge capacity of the first cycle, which was the 800-cycle capacity retention rate of the battery.

Battery gas production performance test included: after the battery was fully charged, the initial volume V1 of the battery was tested, and then the battery was stored in a high-temperature cabinet at 60 °C. The battery was recharged and the volume was tested every 7 days. After 56 days, the volume of the test battery was V2, and (V2-V1)/V1 was gas production growth.

See Table 1 for the test results of Examples 1 to 11 and Comparative examples 1 to 2.

**Table 1: Structural performance and battery performance of positive electrode materials prepared in Examples 1 to 11 and Comparative examples 1 to 2**

| Sample | Cavity ratio of positive electrode cross-section | EDS sulfur content wt of positive electrode cross-section | Tap density g/cm³ of positive electrode particle | Capacity retention of 800 cycles | Growth rate of 56-day gas production |
|---|---|---|---|---|---|
| Example 1 | 0.51% | 0.01% | 2.81 | 79.10% | 2.40% |
| Example 2 | 1.50% | 0.01% | 2.72 | 85.10% | 3.10% |
| Example 3 | 2.70% | 0.02% | 2.65 | 85.70% | 3.20% |
| Example 4 | 3.60% | 0.04% | 2.57 | 84.50% | 3.40% |
| Example 5 | 5.40% | 0.05% | 2.49 | 82.90% | 3.80% |
| Example 6 | 9.20% | 0.32% | 2.27 | 82.80% | 5.30% |
| Example 7 | 2.70% | 0.01% | 2.64 | 85.90% | 2.50% |
| Example 8 | 2.70% | 0.02% | 2.62 | 88.30% | 1.80% |
| Example 9 | 2.70% | 0.01% | 2.67 | 87.40% | 2.10% |
| Example 10 | 5.40% | 0.05% | 2.53 | 84.0% | 3.4% |
| Example 11 | 5.40% | 0.05% | 2.51 | 83.5% | 3.6% |
| Comparative example 1 | 0.20% | 0.00% | 2.91 | 71.90% | 9.70% |
| Comparative example 2 | 15.40% | 0.50% | 2.38 | 73.20% | 8.30% |

Comparing Example 3, Example 8, and Comparative Example 1, it may be seen that when the sulfur content in the positive electrode cross-section was too low (<0.01 wt%), the cavity ratio of the positive electrode cross-section was lower (<0.5%), and the positive electrode material had a lower cycle capacity retention rate at 800 cycles, and a larger increase in gas production. This is because when the interior of the positive electrode material was denser overall, there was no cavity inside the secondary particle to buffer the stress generated by the volume expansion/contraction of the material during the charge and discharge process. As a result, the secondary particle was ruptured during the cycle, and the side reactions at the interface between the positive electrode and the electrolyte solution were intensified, resulting in worse cycle and gas production performance of the battery.

Comparing Example 4, Example 9, and Comparative Example 2, it may be found that when the sulfur content in the positive electrode cross-section was too high (≥0.5 wt%), there were too many internal cavities in the secondary particle (the positive electrode cross-sectional cavity ratio was ≥15%), and the tap density of the positive electrode material was also low. The particles were readily crushed during rolling, resulting in significant side reactions at the interface between the positive electrode and the electrolyte solution, resulting in deterioration of the cycle and gas production performance of the battery.

Comparing Example 5, Example 10, and Example 11, it may be found that when the sulfur content in the positive electrode cross-section was the same, the adjustment of the composition ratio among Ni, Co, and Mn elements in the positive electrode material did not affect the tap density of the positive electrode material and the cycle and gas production performance of the secondary battery assembled with the positive electrode material.

Based on the above, from the above cases, it may be found that when the sulfur content and cavity ratio of the positive electrode cross-section in the positive electrode material were distributed within a certain range, the cycleability of the material was better, because a certain proportion of the internal cavity may buffer the volume strain of the positive electrode during the charge and discharge process, and alleviate the rupture phenomenon of the secondary particle during the cycle process. In contrast, when the sulfur content was too high or too low, and the internal cavity ratio of the positive electrode particles was too low or too high, the stress release of the material during the charge and discharge process was affected, aggravating the side reactions at the interface between the electrode and the electrolyte solution, and leading to deterioration of cycle and gas production performance.

In the positive electrode material and the preparation method thereof, the positive electrode sheet, and the electrochemical device of the invention, based on the positive correlation characteristics between the content of the A element in the positive electrode material particles and the cavity ratio, by introducing an appropriate proportion of the A element when the positive electrode material precursor is formed, the accompanying cavity structure formed inside the precursor is at an appropriate cavity ratio, in order to ensure that the positive electrode material may buffer the volume strain during the charge and discharge process through the internal appropriate proportion of the cavity structure, and alleviate the rupture phenomenon of the secondary particle during the cycle, thereby improving the cycle life and volume energy density of the positive battery. Therefore, the invention effectively overcomes some practical issues in the prior art and thus has high utilization value and use significance.

## Claims

1. A positive electrode material, wherein the positive electrode material is a secondary particle (1) formed by an aggregation of primary particles, and the secondary particle contains a cavity structure (2) inside.

2. The positive electrode material of claim 1, wherein a chemical formula of the positive electrode material is Li₁₊ₐ[NiₓCo_{y}M_{z}]O_{2-b}A_{b}, 0.7 ≤ x < 1, 0 ≤ y < 0.3, 0 ≤ z < 0.3, -0.2 < a < 0.2, 0 ≤ b < 0.2, x + y + z = 1; wherein the M element comprises one or a plurality of Mn, Al, Ti, Zr, Mg, Sr, W, Mo, B, V, Se, Nb, Ru, Rh, Pd, Sb, Te, Ce, Ca, Zn, Y and W, and the A element comprises one or a plurality of F, N, Cl, S, and P.

3. The positive electrode material of claim 2, wherein at least one element in the A element is attached to an inner layer of the cavity structure.

4. The positive electrode material of claim 3, wherein the element attached to the inner layer of the cavity structure comprises a sulfur element, and a cavity ratio of the positive electrode material is positively correlated with a content of the sulfur element in the positive electrode material.

5. The positive electrode material of claim 2, wherein when a sulfur element content in the secondary particle is 0.01 wt% to 0.35 wt%, the positive electrode material has a cavity ratio of 0.5% to 10%, and a particle tap density of the positive electrode material is 2.38 g/cm³ to 2.81 g/cm³.

6. The positive electrode material of claim 2 , wherein a valence state of the sulfur element in the positive electrode material is at least one of -2 valence, +4 valence, and +6 valence; wherein the sulfur element remains in the cavity structure in a form of at least one of sulfide ions, thiosulfate ions, sulfate ions, and sulfite ions.

7. The positive electrode material of claim 6, wherein when the sulfur element content in the secondary particle is 0.01 wt% to 0.1 wt%, an XPS photoelectron peak binding energy range of the sulfur element in the positive electrode material is 168±2eV;
when the sulfur element content in the secondary particle is 0.01 wt% to 0.05 wt%, the XPS photoelectron peak binding energy range of the sulfur element in the positive electrode material is 168.5±1eV.

8. The positive electrode material of claim 1, wherein an inner diameter of the cavity structure is 10 nm to 1 µm.

9. A preparation method of a positive electrode material, comprising:
mixing a nickel source, a cobalt source, and an M element carrier source for a co-precipitation reaction to obtain a nickel-cobalt precursor material; wherein the M element comprises one or a plurality of Mn, Al, Ti, Zr, Mg, Sr, W, Mo, B, V, Se, Nb, Ru, Rh, Pd, Sb, Te, Ce, Ca, Zn, Y and W; and at least one element carrier source in the nickel source, the cobalt source, and the M source is sulfate;
mixing the nickel-cobalt precursor material with a lithium source and then sintering to obtain a positive electrode material;
wherein the nickel-cobalt precursor forms a cavity structure inside the secondary particle during a co-precipitation reaction synthesis process.

10. The preparation method of the positive electrode material of claim 9, wherein the nickel source, the cobalt source, and the M element carrier source comprise an A element, and the A element comprises one or a plurality of F, N, Cl, S, and P, wherein during the co-precipitation reaction synthesis process of the nickel-cobalt precursor, the A element is attached inside the cavity structure.

11. The preparation method of the positive electrode material of claim 10, wherein a sulfur element in the element A is attached inside the cavity structure, and a cavity ratio of the positive electrode material is 0.5% to 10%.

12. An electrochemical device, comprising a positive electrode sheet, a negative electrode sheet, a separator, and an electrolyte solution, wherein the positive electrode sheet comprises the positive electrode material of any one of claims 1 to 8, or the positive electrode material prepared by the preparation method of any one of claims 9 to 11.
